Europäisches Patentamt

European Patent Office

Office européen des brevets

(19)

(11) Publication number: **0 432 932 A2**

# EUROPEAN PATENT APPLICATION

(21) Application number: **90312795.9**

(22) Date of filing: **23.11.90**

(51) Int. Cl.⁵: **F23C 11/02, F16L 59/18,**
**F16L 59/12**

(30) Priority: **12.12.89 US 449022**

(43) Date of publication of application:
**19.06.91 Bulletin 91/25**

(84) Designated Contracting States:
**AT DE ES GB IT SE**

(71) Applicant: **THE BABCOCK & WILCOX**
**COMPANY**
**1010 Common Street, P.O. Box 60035**
**New Orleans, Louisiana 70160(US)**

(72) Inventor: **Detzel, Roger Alan**

**2994 Shellhart Road**
**Norton, Ohio 44203(US)**
Inventor: **Knoebel, Paul S.**
**1029 Center Road**
**Clinton, Ohio 44216(US)**
Inventor: **Walker, David Judson**
**185 Dawna Drive**
**Wadsworth, Ohio 44281(US)**

(74) Representative: **Purvis, William Michael**
**Cameron et al**
**D. Young & Co. 10 Staple Inn**
**London WC1V 7RD(GB)**

(54) **Transport apparatus for hot particulate material.**

(57) A segmented insert (22a), 22b) installed within a
horizontal conduit (12) of a non-mechanical means
(such as an L-valve) to control the external flow of
particulate material recycled to a fluidized bed com-
bustor is insulated (18, 20) to protect the horizontal
conduit (12) and the individual segments (22a, 22b)
are joined together by a combination of a collar (24)
and hinge means (26). This method of coupling
retains co-axial alignment of the individual segments
(22a, 22b) for leak-free operation while also enabling
them to move or pivot independently of each other
while still being connected together. Such indepen-
dent movement permits stress release during high
temperature operation.

## FIG. 4

EP 0 432 932 A2

## TRANSPORT APPARATUS FOR HOT PARTICULATE MATERIAL

The invention relates to apparatus for the transportation of hot particulate material.

A conduit may be required to recycle particulate material at a high temperature, for example approximately 870°C (1600°F) or more using non-mechanical means of control such as an L-valve.

The use of L-valves or other non-mechanical means to control the flow rate of particulate material in circulating fluidized bed boilers is well known. However, when the particulate material reaches or exceeds a temperature of about 480°C (900°F), serious problems occur due to the thermal gradients involved. During periods of sporadic use, the material in the horizontal transport conduit will have had time to cool down. Then, when flow is again required, the new hot material entering the horizontal conduit causes extreme cases of longitudinal and circumferential temperature gradients to occur within the conduit. If frequently repeated, the conduit will fail due to buckling, twisting or tearing as a result of its expansion and contraction. Welds have been known to fail due to the tremendous forces involved that rapidly build-up. Temperature swings of several hundred degrees over a period of only a few minutes have been recorded. Also, vastly different temperature readings may occur on opposite sides of the conduit. Some patterns of distortion will lead to failure of the conduit itself.

Attempts to insulate the horizontal conduit have been to no avail as this only protects the outer casing surrounding the conduit (if at all) and not the conduit itself which is in direct contact with the hot particulate material. Additionally, attempts to secure this conduit to its outer casing have also failed due to the buckling and/or required movement of the conduit under such conditions. The temperature gradients in the conduit from top to bottom may cause the conduit to bend into an arc or a 'banana' shape thereby tearing itself loose inside the outer casing. As a result, the gas and solid matter being recirculated is no longer contained but instead begins to leak from the conduit and potentially can eventually escape from within the outer casing.

According to one aspect of the invention there is provided apparatus to transport hot particulate material in a circulating fluidized bed boiler via non-mechanical means comprising:

a. an insulated generally horizontal conduit extending to a furnace from the non-mechanical means;

b. an insulated insert positioned within the horizontal conduit and divided into segments;

c. a collar secured to an end region of one of the insert segments and extending beyond an end region of an adjacent one of the insert segments, the collar being sized closely to fit around the adjacent one of the segments while enabling the adjacent one of the segments freely to move longitudinally with respect to said one of the insert segments;

d. hinge means pivotally to secure a portion of two adjacent ones of the insert segments together, the hinge means enabling the segments to pivot with respect to each other while remaining secured together; and

e. positioning means accurately to align and position the segments with respect to the horizontal conduit.

According to another aspect of the invention there is provided apparatus to convey hot particulate material in a circulating fluidized bed boiler having a horizontal conduit connecting between an L-valve and a furnace and comprising:

a. a segmented insert sized to fit within the horizontal conduit;

b. compressible insulation positioned within an annular region between the insert and the horizontal conduit;

c. hinge means pivotally to secure adjacent insert segments of the insert together the hinge means being attached to lower regions of the adjacent segments;

d. collar means axially to align the adjacent insert segments, the collar means being secured to one of the segments and extending around an end region of an adjacent one of the segments;

e. support means to support and position the segmented insert 22 within the horizontal conduit; and,

f. sealing means to seal the ends of the annular region and to protect the insulation therein from the conveyed material.

Such a transport conduit can accommodate extreme temperature gradients without releasing any contained material, can 'flex' as needed while still remaining intact within an outer casing and can have a low thermal mass which allows for relatively rapid heat-up and cool down for more even temperature distribution. The conduit can be buffered from the extreme temperature levels, thermal transients, and differentials that arise during the transport of the hot particulate material.

The invention is diagrammatically illustrated by way of example in the accompanying drawings, in which:-

Figure 1 is a side view, partially broken away, of non-mechanical means for conveying hot particulate material (an L-valve) and its corresponding horizontal conduit in accordance with the invention;

Figure 2 is a sectional view, partially broken away, taken on line 2-2 of Figure 1;

Figure 3 is a sectional view, partially broken away, taken on line 3-3 of Figure 2;

Figure 4 is a sectional view, partially broken away, taken on line 4-4 of Figure 2;

Figure 5 is a sectional view, partially broken away, taken on line 5-5 of Figure 4; and

Figure 6 is a sectional view, partially broken away, taken on line 6-6 of Figure 4.

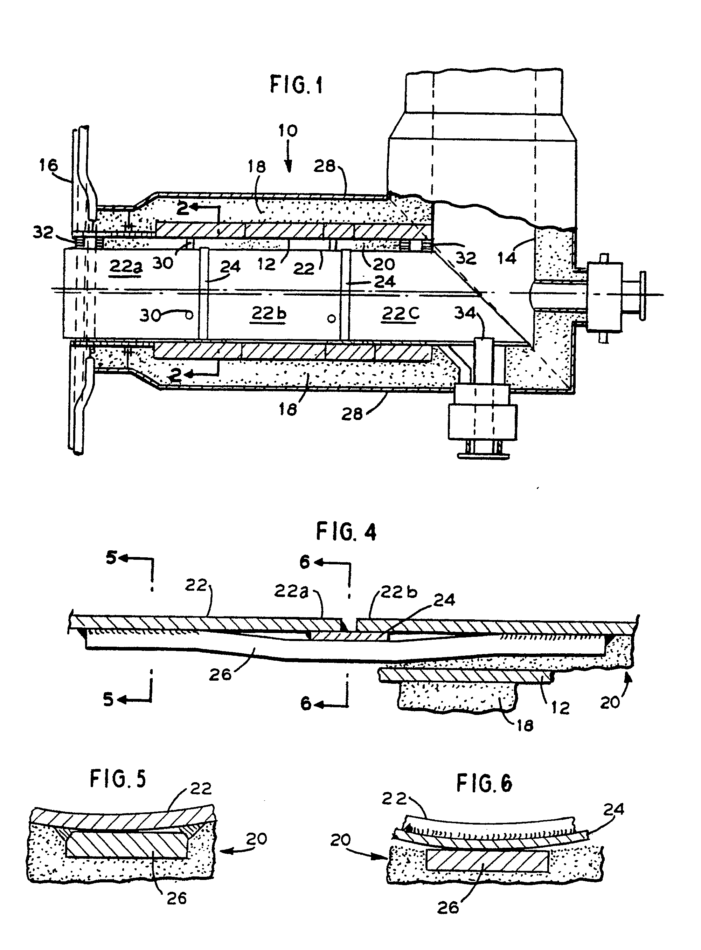

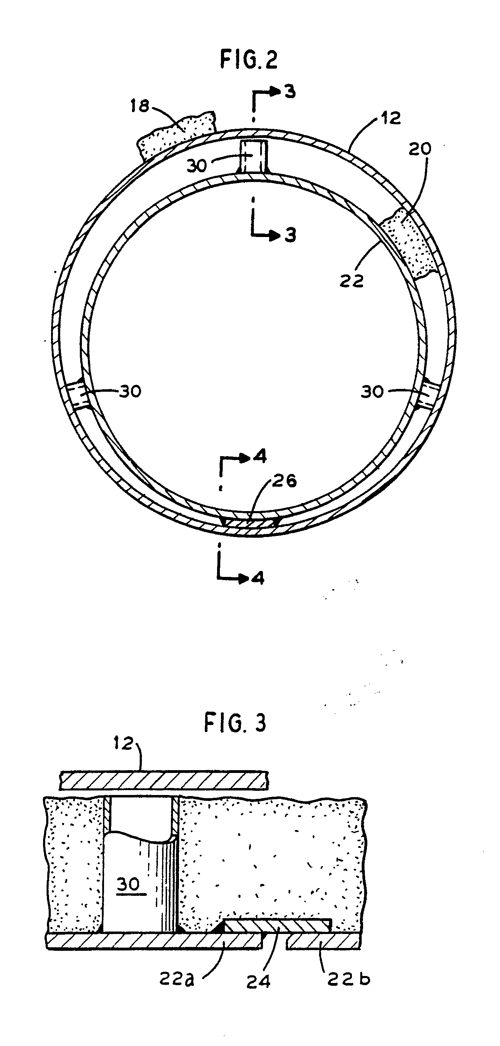

Referring initially to Figure 1, there is shown a non-mechanical or L-valve assembly 10 with a horizontal conduit 12 and a vertical conduit 14. The horizontal conduit 12 opens to a furnace 16 and conveys particulate material and flue gas to the furnace 16 from the vertical conduit 14. Because of the high temperatures involved, for example 870° C (1600° F) or more, the horizontal conduit 12 is normally constructed of stainless steel and is encircled with insulation 18.

To protect the horizontal conduit 12 from extreme temperature levels, gradients, and transients, the inner surface of the conduit 12 is lined with insulation 20. An insert 22 is then installed within the insulation 20 and the horizontal conduit 12 to protect the insulation 20 from the particulate material. The insulation 20 may be of a different composition and make-up to the insulation 18 which generally comprises blanket, board and poured-in-place refractory. The insulation 20, is a compressible high temperature insulation which can accommodate the flexing, bowing or humping of the insert 22 which will occur due to the severe top to bottom temperature differentials that arise during operation.

The insert 22 is not one long continuous length of pipe since if it were the problems normally associated with the horizontal conduit 12 would also occur with the insert 22. Instead, the insert 22 is segmented with three segments, 22a, 22b and 22c being illustrated in Figure 1. More or fewer segments may be used as needed. The segments 22a 22b and 22c remain in longitudinal alignment due to a collar 24 welded to the end of one of the two adjacent segments as shown in Figures 3 and 4. Since the collar 24 is welded to the outside circumference of one segment (segment 22a) and extends beyond the end of this segment and overlaps the adjacent segment (segment 22b), this adjacent segment can slide within the collar 24 while remaining axially aligned with the first segment. Generally, there is a clearance of only about 0.8mm (0.031 inch) between the collar 24 and the adjacent segment. The collar 24 ensures that each of the segments 22a, 22b, and 22c may independently move with respect to the others while still remaining in sufficient axial alignment to transport the particulate material therethrough. Also, the close tolerance between the collar 24 and the adjacent segment ensures that minimal or no particulate material and little flue gas will escape from within the insert 22 as the individual segments flex due to the high temperatures involved. To maintain the proper positioning of the segments 22a, 22b, and 22c during their expansion and contraction, a hinge 26 is secured between the adjacent segments along their bottom. As shown in Figures 4, 5 and 6 the hinge 26 is an elongate strip of metal bent around the collar 24 that is welded to adjacent ones of the segments 22a and 22b. In this manner, the segments 22a and 22b are free to flex, bend or pivot as needed while still being connected to each other. Thus, each of the segments 22a 22b and 22c is able to bow or bend into the shape of a banana, or expand or contract both axially and circumferentially as the need arises. Since the insulation 20, is of the compressible type, it will consequently conform to whatever shape the insert 22 takes thereby protecting and insulating the horizontal conduit 12 and an outer casing 28.

As can be seen in Figure 2, the insert 22 and the horizontal conduit 12 are radially offset with respect to each other. The eccentric location of the insert 22 reduces the top to bottom temperature differential in the horizontal conduit 12 because of the flow characteristics of the particulate material. During operation, more flow occurs along the top of the insert 22 than along the bottom. Consequently, the temperature along the bottom of the insert 22 closely conforms to the temperature of the relatively stagnant and cooled solids while the temperature along the top of the insert 22 closely conforms to the temperature of the newly recirculated and hotter flue gas. Thus, due to the eccentric location of the insert 22, the hotter upper portion of the insert 22 is positioned closer to the centre of the horizontal conduit 12 thereby increasing its distance from the upper portion of the horizontal conduit 12 as well as providing for more insulative covering.

Alignment guides 30 are secured along the circumference of the insert 22 to restrain the insert 22 in place. As shown, they are welded to the insert 22 and located adjacent to one end of the respective segment thereby enabling the other end freely to move or flex as needed. As shown in Figure 3, when the insert 22 is positioned within the horizontal conduit 12, the upper guides 30 do not engage or contact the conduit 12. Instead, there is a small gap between the two to allow for the more rapid expansion of the insert 22 than of the conduit 12. The alignment guides 30 function to retain the insert 22 in its eccentric location with respect to the horizontal conduit 12.

Additionally, the segment 22c is further secured in position by a pin 34 that extends through an opening in the bottom of segment 22c. The pin 34 secures the segment 22c to the L-valve assembly 10 and prevents the segment 22c (and consequently the segments 22a and 22b as well) from shifting toward the furnace and thus departing from the L-valve or from rotating inside the conduit 12.

Packing 32 is secured around the opposite ends of the insert 22 to prevent the particulate material and the flue gas from engaging the insulation 20 and possibly destroying it. The packing 32 also prevents aeration gases from the L-valve 10 and the vertical conduit 14 passing through the insulation 20 thereby by-passing the insert 22. Likewise the close clearance between the collars 24 and their adjacent segment prevents leakage from occurring from between the adjacent segments 22a, 22b and 22c.

## Claims

1.  Apparatus to transport hot particulate material in a circulating fluidized bed boiler via non-mechanical means (10) comprising:
    a. an insulated generally horizontal conduit (12) extending to a furnace (16) from the non-mechanical means (10);
    b. an insulated insert (22) positioned within the horizontal conduit (12) and divided into segments (22a, 22b, and 22c);
    c. a collar (24) secured to an end region of one of the insert segments and extending beyond an end region of an adjacent one of the insert segments, the collar (24) being sized closely to fit around the adjacent one of the segments while enabling the adjacent one of the segments freely to move longitudinally with respect to said one of the insert segments;
    d. hinge means (26) pivotally to secure a portion of two adjacent ones of the insert segments together, the hinge means (26) enabling the segments to pivot with respect to each other while remaining secured together; and,
    e. positioning means (30, 34) accurately to align and position the segments with respect to the horizontal conduit (12).

2.  Apparatus according to Claim 1, wherein the insert (22) is eccentrically positioned within the horizontal conduit (12), being located closer to the bottom of the horizontal conduit (12) than to the top.

3.  Apparatus according to Claim 1 or Claim 2, wherein the hinge means comprise a metal strip (26) securing laid two adjacent ones of the segments together and being secured to bottom region of the segments.

4.  Apparatus according to Claim 3, wherein the collar (24) is configured to provide a gap of approximately 0.8mm (0.031 inch) between itself and the adjacent one of the segments.

5.  Apparatus to convey hot particulate material in a circulating fluidized bed boiler having a horizontal conduit (12) connecting between an L-valve (10) and a furnace (16) and comprising:
    a. a segmented insert (22) sized to fit within the horizontal conduit (12);
    b. compressible insulation (20) positioned within an annular region between the insert (22) and the horizontal conduit (12);
    c. hinge means (26) pivotally to secure adjacent insert segments (22a, 22b, 22c) of the insert (22) together, the hinge means (26) being attached to lower regions of the adjacent segments;
    d. collar means (24) axially to align the adjacent insert segments, the collar means (24) being secured to one of the segments and extending around an end region of an adjacent one of the segments;
    e. support means (30, 34) to support and position the segmented insert (22) within the horizontal conduit (22); and,
    f. sealing means (32) to seal the ends of the annular region and to protect the insulation (20) therein from the conveyed material.

6.  Apparatus according to Claim 5, wherein the insert (22) is eccentrically located within the horizontal conduit (12) being offset towards the bottom of the horizontal conduit (12).

7.  Apparatus according to Claim 6, wherein the hinge means comprise a metal strip (26) pivotally securing the adjacent ones of the segment together, the strip being secured to the bottoms of the adjacent segments.

8.  Apparatus according to Claim 6 or Claim 7, wherein the collar means comprise a collar (24) sized slightly larger than the outside diameter of said adjacent one of the segments thereby containing the conveyed material therein.

9.  Apparatus according to Claim 8, wherein the collar is spaced from the adjacent one of the segments approximately 0.8mm (0.031 inch).

10. Apparatus according to Claim 6, wherein the support means comprise members (30) radiating away from the insert and extending across the annular region to engage the horizontal conduit (12), the members (30) maintaining the eccentric orientation of the segmented insert with respect to the horizontal conduit.

11. Apparatus according to any one of claims 5 to 10, wherein the sealing means comprise packing material to pack and restrain the insulation (20) within the annular region.

12. Apparatus according to Claim 10, wherein the members (30) radiating from the insert (22) are secured to respective ones of the segments adjacent the collar (24).

FIG. 1

FIG. 4

FIG. 5

FIG. 6

# FIG. 2

# FIG. 3